# EUROPÄISCHE PATENTANMELDUNG

(11) **EP 1 816 070 A2**
(43) Veröffentlichungstag der Anmeldung: **08.08.2007**
(21) Anmeldenummer: 07002674.5
(22) Anmeldetag: 07.02.2007
(51) Int. Cl.: B64C 1/00

(54) **Flugzeugkörper und Verfahren zu seiner Herstellung**

(30) Priorität: 07.02.2006 DE 102006005755; 21.09.2006 DE 102006044683
(71) Anmelder: Grob, Margret, 86825 Bad Wörishofen (DE)
(72) Erfinder: Grob, Burkhart, Dr. h. c., 86825 Bad Wörishofen (DE)
(74) Vertreter: Pfister, Stefan Helmut Ulrich

(57) **Zusammenfassung**

Die Erfindung betrifft einen Flugzeugkörper (2), insbesondere den Rumpf (2) eines Flugzeugs, wobei der Rumpf (2) aus einem Kunststoffaufbau hergestellt ist. Der Rumpf (2) besteht aus wenigstens zwei Teilen, die an den Kanten miteinander verbunden und von Bindern (6) umgeben sind. Die Erfindung betrifft ebenso ein Verfahren zur Herstellung eines derartigen Flugzeugs.

## Beschreibung

Die Erfindung betrifft ein Flugzeugkörper, insbesondere den Rumpf eines Flugzeugs, bestehend aus wenigstens zwei, bevorzugt aus Kunststoff hergestellten Teilen, wobei die Teile an ihren Kanten miteinander verbunden sind. Die Erfindung betrifft ebenso ein Verfahren zur Herstellung eines derartigen Flugzeugkörpers.

Aus Kunststoff hergestellte Flugzeuge sind bereits bekannt. Hier werden einzelne Teile des Flugzeugs in Teilen gefertigt und diese anschließend durch Kleben miteinander verbunden.

Neuerdings werden derartige Flugzeuge aus Kunststoff auch für den Langstreckenflug eingesetzt, die aus wirtschaftlicher Sicht in großen Höhen durchgeführt werden, was voraussetzt, daß für den Piloten und die Passagiere eine Druckkabine vorgesehen ist. Diese Druckkabine muß einer Druckdifferenz zwischen dem Innendruck und dem wesentlich niedrigeren Außendruck in relativ großer Höhe standhalten.

Der Erfindung liegt die Aufgabe zugrunde, das Flugzeug, insbesondere den Rumpf des Flugzeugs besonders im Bereich einer Druckkabine zu stabilisieren.

Diese Aufgabe wird erfindungsgemäß dadurch gelöst, dass der Flugzeugkörper beziehungsweise die Teile zumindest teilweise mit einer Verstärkung versehen ist/sind.

Die Aufgabe wird erfindungsgemäß dadurch gelöst, dass ein Flugzeugkörper, insbesonere ein Flugzeugrumpf vorgeschlagen wird, welcher aus mindestens zwei, bevorzugt aus Kunststoff hergestellten Teilen, besteht, wobei die Teile an ihren Kanten miteinander verbunden sind und der Flugzeugkörper beziehungsweise die Teile zumindest teilweise mit einer Verstärkung versehen sind. Die erfindungsgemäß vorgeschlagene Verstärkung bewirkt eine Erhöhung der Stabilität des Flugzeugkörpers. Es ist zu beachten, dass das Flugzeug für den Luftverkehr in großer Höhe mit einer Druckdifferenz zwischen Außenhaut und Innenhaut von circa 0,6 bar beaufschlagt ist. Der höhere Innendruck bläht den Flugzeugkörper auf, die Verstärkung erreicht eine ausreichende Stabilisierung. Durch den erfindungsgemäßen Vorschlag wird es möglich, erfindungsgemäß ausgebildete Flugzeugkörper auch für Flugzeuge einzusetzen, die in Höhen von über 3000 Meter fliegen. Die für Segelflugzeuge beziehungsweise leichte Motorflugzeuge bereits bekannten Flugzeugkörper aus Kunststoff werden durch den erfindungsgemäßen Vorschlag im Einsatzbereich erheblich ausgeweitet und Gewicht gespart. Hierfür haben erfindungsgemäß ausgebildete Flugzeuge durch eine höhere, mitgeführte Treibstoffmenge eine höhere Reichweite.

Erfindungsgemäß ist dabei vorgesehen, dass die Verstärkung winklig, insbesondere rechtswinklig zu der Kante verläuft und insbesondere die Kanten der benachbarten Teile übergreift. Die Erfindung beschränkt sich dabei nicht nur auf eine entsprechende Aussteifung des flugzeugkörperbildenden Teiles, sondern stabilisiert beziehungsweise steift auch den Verbindungsbereich an den Kanten zweier benachbarter Teile entsprechend aus. Dabei wird geschickterweise angestrebt, dass die Verstärkung zum Beispiel ringartig um den Flugzeugkörper herumgeführt ist und so eine Aussteifung ergibt.

Als eine Möglichkeit ist vorgesehen, den Flugzeugkörper zumindest im Bereich der Druckkabine zu ummanteln. Auch sind Verstärkungsfasern, die im Material der Teile eingearbeitet sind, möglich. Jedoch die die Kanten übergreifenden Verstärkungen lassen sich nur sehr schwer anordnen.

Es hat sich als besonders vorteilhaft erwiesen, die Teile des Flugzeugkörpers auf dessen Außenseite mit einer Ummantelung zu versehen, sodass durch diese Ummantelung die Teile des Flugzeugkörpers zusammengehalten werden. Insbesondere nach einer ersten Ausführungsform ist zumindest die Druckkabine in bestimmten Abständen radial von Bindern umgeben, die nicht nur die beiden Teile des Flugzeugkörpers an ihren Kanten zusammenhalten, sondern auch den übrigen Bereich des Flugzeugkörpers verstärken. Trotz des in der Druckkabine herrschenden Überdrucks bleibt die Form der Druckkabine im Wesentlichen erhalten. Die Binder bestehen beispielsweise aus faserverstärktem Kunststofflaminat, wobei als Faser insbesondere Kohlefasern Verwendung finden. Auch Glasfasern oder Kunststofffaser sind zur Verstärkung des Laminates sehr gut geeignet, da diese ebenso wie Kohlefasern sehr leicht sind und auf Zug stark belastbar sind. Durch Einbringen von Aluminiumfasern in die Binder entsteht um die Druckkabine ein sogenannter Faradayscher Käfig, der das Flugzeug vor Blitzeinschlag schützt.

Die Binder bestehen aus circa fünf bis zwanzig Zentimeter breiten Streifen mit einer Stärke von circa ein bis fünf Milimeter. Zumindest im Bereich der zusammengefügten Kanten der Teile sind Binderabschnitte angeordnet, die die Klebenaht zusätzlich zusammenhalten. Nach einer weiteren Ausführung sind die Binder radial um den Flugzeugkörper gelegt und werden an ihren Enden miteinander verbunden. Dadurch entsteht eine ringartige Ausbildung des Binders. Zum Verbinden dieser Enden miteinander eignet sich insbesondere wiederum Epoxydharz als Kleber, das bereits zum Laminieren der beiden Teile des Flugzeugkörpers Verwendung gefunden hat. Es ist erfindungsgemäß günstig, als Kleber für die Ausbildung des Binders den gleichen Kleber zu verwenden, der auch bei der Herstellung des aus Kunststoff bestehenden Teiles des Flugzeugkörpers eingesetzt wird. Nicht nur an den Enden sind die Binder miteinander verbunden, sondern auch mittels des Epoxydharzes am Flugzeugkörper verklebt. Die Lage der Binder ist somit stabilisiert. Ein Verrutschen ist damit unmöglich.

Neben diesen Bindern, die den Flugzeugkörper radial umgeben - im Folgenden als Radialbinder bezeichnet -, sind am Flugzeugkörper auch Binder vorgesehen, die quer zur Längsachse des Flugzeugkörpers angeordnet sind. Diese Querbinder umspannen beispielsweise die Druckspante, die die Druckkabine am vorderen und hinteren Ende abschließen. Die Spante selbst sind mit dem Flugzeugkörper verklebt und zur Verstärkung der Klebekanten übergreifen die Querbinder die Druckspante diagonal, sind an den Kanten der Druckspante abgewinkelt und verlaufen über einen gewissen Bereich entlang der Außenwand der Druckkabine. Die Außenwand wird nach einem weiteren Ausführungsbeispiel von den Teilen gebildet, aus denen der Flugzeugkörper besteht. Es ist deshalb günstig die Querbinder, die die Druckspante überdecken von der Innenseite des Flugzeugkörpers nach außen zu führen, sind in der Wandung des Flugzeugkörpers Aussparungen vorgesehen. Diese Aussparungen sind schlitzartig ausgebildet, deren Abmessung derart bemessen ist, dass die Binder leicht hindurchgeführt werden können. Zumindest auf der Außenseite des Flugzeugkörpers sind die Binder mit dem Rumpf verklebt. Jedoch auch im Bereich der Druckspante verstärkt eine Klebeverbindung die Verbindung zwischen Binder und Druckspant.

Nach einer weiteren Ausführung können die Querbinder über die gesamte Länge der Druckkabine entlanggeführt sein und den gegenüberliegenden Druckspant umfassen, wobei der Querbinder wie auch der Radialbinder an seinen Enden miteinander verklebt ist und so die Druckkabine in Längsrichtung zur Flugzeuglängsachse vollständig umfasst. Die Druckkabine ist somit von skelettartig angeordneten Bindern umgeben, die zumindest die Druckkabine korsettartig umfassen. Es wird mit wenig Materialaufwand eine gerüstartige Stütze für die Druckkabine gebildet.

Gerade die Radialbinder verlaufen rechtwinklig zur Kante der beiden Halbschalen des Flugzeugkörpers. Durch die rechtwinklige Anordnung der Binder zu den Kanten werden die Teile des Flugzeugkörpers mit dem minimalsten Kraftaufwand zusammengehalten.

Die Radialbinder sind gemäß einer erfindungsgemäßen Variante einstückig ausgebildet, das heißt sie bestehen aus einem Band, das an seinen Enden miteinander verbunden ist. Die Querbinder übergreifen in einer Ausführungsform die Druckkabine in Längsrichtung nur teilweise. Es besteht jedoch die Möglichkeit, an den Enden der Querbinder Längsbinder (parallel zur Längsachse des Flugzeuges) anzuordnen, die beispielsweise die Querbinder der hinteren Druckspant mit den Querbindern der vorderen Druckspant miteinander verbinden. Auf diese Weise bestehen die Querbinder aus Teilstücken, die miteinander verbunden sind.

Es hat sich als besonders vorteilhaft erwiesen, dass Flugzeugkörper und Binder aus dem gleichen Material bestehen. Auf diese Weise ist ein Verkleben der Binder mit dem Flugzeugkörper mittels Epoxydharzes ohne weiteres möglich. Neben den Radialbindern und Querbindern, die die Druckkabine umfangen, sind des Weiteren an dem Flugzeugkörper Längsbinder vorgesehen, die sich beispielsweise von der Nase des Flugzeugkörpers bis in den Heckflossenbereich erstrecken. Auf diese Weise wird nicht nur der Bereich der Druckkabine verstärkt, sondern auch der gesamte Flugzeugkörper. Es hat sich als besonders günstig erwiesen, die verschiedenen Binder Radial-, Längs- und/oder Querbinder an den Stellen, an denen sie einander überschneiden, ebenfalls zu verbinden. An diesen Stellen sind mehrere Schichten von Bindern übereinandergelegt. Nach einer weiteren Ausführungsform der Erfindung ist vorgesehen nicht nur eine Schicht eines Binders am Flugzeugkörper anzuordnen, sondern eventuell zwei oder drei Lagen übereinander, sodass eine noch bessere Verstärkung des Flugzeugkörpers ermöglicht wird. Auch kann ein Binder entlang der Kante der beiden Teile des Flugzeuges entlanggeführt sein, wobei diese Binder zusätzlich durch Radialbinder umfasst werden. Nach einer weiteren Ausführungsform der Erfindung ist vorgesehen, dass beispielsweise Längsbinder teilweise längs geteilt sind, das heißt ein Teil des Längsbinders erstreckt sich von der vorderen Spitze des Flugzeugkörpers bis zu dessen Ende und der andere Teil des Längsbinders umgibt den Flugzeugkörper im Bereich der Druckkabine. Entlang der Längsachse der Druckkabine liegen somit beide Teile des Längsbinders auf der Außenseite des Flugzeugkörpers auf, wobei am Ende der Druckkabine ein Teil des Längsbinders in den Innenraum des Flugzeugkörpers hineingeführt und gegebenenfalls an der entgegenliegenden Seite wieder herausgeführt wird.

Nach der Erfindung ist der skelettartige Aufbau der Verstärkung auf der Außenseite der Druckkabine beziehungsweise teilweise auf der Außenseite des Flugzeugkörpers angeordnet und liegt auf der Oberfläche des Flugzeugkörpers auf. Durch die Stärke der Binder im Bereich von circa ein bis fünf Milimeter entsteht zwischen den Rändern der Binder und der Oberfläche des Flugzeugkörpers - ein Absatz, der - um den Strömungswiderstand gering zu halten, verspachtelt wird.

Nach einer weiteren vorteilhaften Variante sind auf der Außenoberfläche des Flugzeugkörpers Vertiefungen vorgesehen, deren Breite und Tiefe in etwa den Abmessungen des Binders entspricht. Die Binder stehen so gegenüber der Oberfläche des Flugzeugkörpers nicht hervor. Der zwischen den Rändern der Binder und dem Rand der Vertiefung entstehende Spalt wird ebenfalls verspachtelt. Auch werden die Aussparungen, die zum Durchführen beispielsweise der Querbinder von der Innenseite des Flugzeugkörpers auf die Außenseite vorgesehen sind, mit Spachtelmasse verschlossen.

Die Anordnung der Binder am Flugzeugkörper ist derart, dass Öffnungen wie Türen, Fenster und dergleichen im Bereich zwischen verschiedenen Bindern angeordnet sind. Dadurch, dass die obere Kante der Tür in der Regel höher angeordnet ist als die Oberkante der Fenster, ist es jedoch auch möglich die Längsbinder in verschiedenen Ebenen anzuordnen, das heißt im Bereich der Aussparung der Tür ist der Längsbinder oberhalb der Oberkante der Tür entlanggeführt und im Bereich der Fenster beispielsweise etwas tiefer. Auch werden beispielsweise, um den Befestigungspunkt für den Flügel zu verstärken, zwei ein Fenster umgreifende Radialbinder im Bereich der Flügel zusammengeführt. Im oberen Bereich des Flugzeugkörpers sind die beiden Radialbinder beabstandet zueinander angeordnet und im unteren Bereich liegen diese zwei Radialbinder eng nebeneinander. Die optimalste Ausführung dieser skelettartigen Verstärkung besteht in Bindern, die sich rechtwinklig kreuzen. Durch die Form des Flugzeugkörpers sind jedoch weitere Anordnungen der Binder notwendig, die die Form des Flugzeugkörpers berücksichtigen.

Neben der Ausbildung des Flugzeugkörpers wird mit der Erfindung auch das Verfahren zur Herstellung des Flugzeugkörpers beansprucht. Die Herstellung eines derartigen Flugzeugkörpers aus mindestens zwei, insbesondere aus Kunststoff hergestellten Teilen, besteht zunächst aus dem Schritt, zuerst die einzelnen Teile des Flugzeugkörpers herzustellen. Dies geschieht beispielsweise im Laminatverfahren, insbesondere in einem Handlaminatverfahren, bei dem mit Epoxydharz getränkte Vliese in einer Form aufeinander geklebt werden. Nach Aushärten dieser Teile des Flugzeugkörpers werden diese zusammengesetzt und an ihren Kanten (diese sind zum Beispiel flauschartig ausgebildet) miteinander verklebt. Zumindest in den Verbindungsbereichen beider Teile miteinander werden die Kanten von Verstärkungen überdeckt. Die Verstärkungen bestehen vorteilhafterweise aus Bindern, die mit dem Flugzeugkörper ebenfalls verklebt werden. Binder und Flugzeugkörper bestehen vorteilhafterweise aus dem gleichen Material, sodass zum Verkleben von Binder und Flugzeugkörper ebenfalls Epoxydharz Verwendung finden kann. Es hat sich als günstig erwiesen, die zusammengesetzten Teile des Flugzeugkörpers mit Bindern zu umwickeln, wobei hierzu Radial-, Quer- und/oder Längsbinder eingesetzt werden. Diese Binder bilden ein Skelett, das die Außenwand des Flugzeugkörpers, insbesondere der Druckkabine, verstärkt. Diese Binder können auf der Oberfläche des Flugzeugkörpers aufliegen oder sind in Vertiefungen, die in der Oberfläche des Flugzeugkörpers eingearbeitet sind, verlegt. Die Absätze, die zwischen den Rändern der Binder und der Oberfläche des Flugzeugkörpers beziehungsweise dem Rand der Vertiefung entstehen, werden anschließend ausgespachtelt, sodass auf der Oberfläche des Flugzeugkörpers keine Unebenheiten bestehen bleiben. Die Aussparungen zum Herausführen der Querbinder vom Inneren des Flugzeugkörpers auf die Außenseite werden ebenfalls verspachtelt.

In diesem Zusammenhang wird insbesondere darauf hingewiesen, dass alle im Bezug auf den Flugzeugkörper beschriebenen Merkmale und Eigenschaften aber auch Verfahrensweisen sinngemäß auch bezüglich der Formulierung des erfindungsgemäßen Verfahrens übertragbar und im Sinne der Erfindung einsetzbar und als mitoffenbart gelten. Gleiches gilt auch in umgekehrter Richtung, das bedeutet, nur im Bezug auf das Verfahren genannte, bauliche also vorrichtungsgemäße Merkmale können auch im Rahmen der Ansprüche des Flugzeugkörpers berücksichtigt und beansprucht werden und zählen ebenfalls zur Erfindung und zur Offenbarung.

Im Folgenden ist die Erfindung anhand einer Zeichnung näher dargestellt. Es zeigen:
- Fig. 1:: einen Ausschnitt eines erfindungsgemäßen Flugzeugkörpers in Seitenansicht;
- Fig. 2:: eine dreidimensionale Ansicht der Binder, wie sie den Rumpf umben, gemäß der Erfindung;
- Fig. 3:: eine Ansicht auf eine Spante eines erfindungsgemäßen Flugzeugkörpers und
- Fig. 4:: eine dreidimensionale Ansicht eines erfindungsgemäßen Flugzeugkörpers mit abgenommenem Seitenteil.

Der in den Figuren dargestellte Rumpf 2 eines Flugzeuges 1 besteht aus zwei aus Kunststoff gefertigten Halbschalen 21, deren Verbindungsebene vertikal entlang der Längsachse des Flugzeuges 1 ausgerichtet ist. Der Flugzeugrumpf 2 besteht somit aus einer rechten und einer linken Halbschale 21 als Teile, aus denen der Flugzeugrumpf 2 gefertigt ist. Nach diesem Ausführungsbeispiel sind die Halbschalen 21 mehrschichtig aufgebaut und werden in einer Form laminiert. Nach Fertigstellung der beiden Halbschalen 21 werden diese durch Kleben miteinander verbunden.

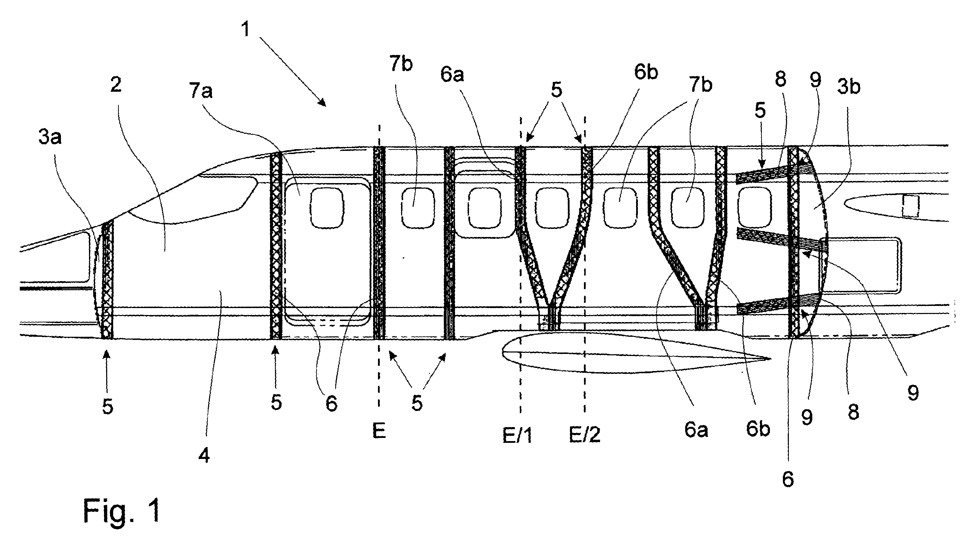

Zur Verstärkung des Rumpfes 2 sind in dem Rumpf 2 Spante 3 vorgesehen. Insbesondere die Druckkabine 4 ist an ihrem vorderen und hinteren Ende durch Druckspante 3a, 3b verschlossen. Die Druckkabine 4 ist ein in sich geschlossener Raum. Es ist nicht notwendig, den gesamten Innenraum des Rumpfes 2 mit einem Druck zu beaufschlagen. Damit der Rumpf 2 des Flugzeugs 1 im Bereich der Druckkabine 4 aufgrund der Druckdifferenz zwischen Innen- und Außendruck nicht zerstört wird, ist erfindungsgemäß, insbesondere bei einem Rumpf 2 aus Kunststoff im Bereich der Druckkabine 4 eine Verstärkung 5 vorgesehen. Diese Verstärkung 5 besteht aus Bindern 6, 8, die in der Ausführung nach Fig. 1 den Rumpf 2 in Querrichtung zur Flugzeuglängsachse beziehungsweise zum Flugzeugkörper umschließen. Diese Binder 6 sind im folgenden als Radialbinder 6 bezeichnet. Am Ende der Druckkabine 4 ist die Druckspante 3b mit Querbindern 8 verstärkt, die vom Inneren des Rumpfes 2 durch Aussparungen 9 nach außen auf die Außenseite des Rumpfes 2 geführt sind. Die Binder 6, 8 sind mit dem Rumpf 2 verklebt.

Vorteilhafterweise bestehen diese Binder 6, 8 aus kohlefaserverstärktem Kunststofflaminat. Dieses Kunststofflaminat ist auf Zug sehr stark belastbar und die derart um den Rumpf 2 gelegten Binder 6, 8 halten die Druckkabine 4 zusammen. Die Wandung des Rumpfes 2 ist durch diese Binder 6 verstärkt. Kohlefaserverstärkte Kunststoffe sind gegenüber Metall wesentlich leichter.

Insbesondere eine Senkung des Gewichtes spielt im Flugzeugbau eine große Rolle. Günstigerweise besteht Materialgleichheit zwischen dem Material der Binder 6, 8 und dem Material des Rumpfes 2.

In Fig. 1 ist zu erkennen, daß die Binder 6, 8 nur in Bereichen des Rumpfes 2 angeordnet sind, die keine Öffnungen 7, beispielsweise für Türen 7a und Fenster 7b tragen. In der optimalsten Ausführung umschlingen die Binder 6 den Rumpf 2 in einer Ebene E. Dies ist die kürzeste Strecke, um den Rumpf 2 zu umfassen und mechanisch am stabilsten.

Wie zu erkennen ist, sind die Binder 6a und 6b auch derart angeordnet, daß sie den Rumpf 2 in verschiedenen Ebenen E/1, E/2 umspannen. Im oberen Bereich sind die Binder 6a, 6b voneinander beabstandet und im unteren Bereich liegen die zwei Binder 6a, 6b eng aneinander, beispielsweise um den Befestigungspunkt für den Flügel zu verstärken. Zwischen den Bindern 6a, 6b ist die Öffnung 7b für ein Fenster vorgesehen, das von den Bindern 6a, 6b teilweise umschlossen wird.

Am Ende der Druckkabine 4 bei dem hinteren Spant 3b sind die Binder 8 derart ausgerichtet, daß sie den Spant 3b im wesentlichen horizontal oder vertikal überspannen. Die Enden der Binder 8 sind abgewinkelt und übergreifen den Rumpf 2 zumindest teilweise in Längsrichtung.

Da die Binder 6, 8 auf der Außenseite des Rumpfes 2 angeordnet sind, werden diese Binder 8 im Bereich der Spante 3b durch gefertigte Aussparungen 9 vom Inneren des Rumpfes 2 nach außen geführt. Nach Fertigstellung des Flugzeuges werden diese Aussparungen 9 verschlossen. Wahlweise können diese Binder 8 auch an der Innenseite an den Rumpf 2 angeordnete Längsbinder angebunden werden.

Die Breite der Binder 6, 8 ist derart bemessen, daß die Binder 6, 8 in den Zwischenraum zwischen den Öffnungen 7, beispielsweise den Fenstern 7b und Türen 7a angeordnet werden können. Die maximale Breite entspricht somit dem minimalsten Abstand zwischen zwei Öffnungen 7.

Es hat sich aber als günstig erwiesen, Binder 6, 8 mit einer Breite von circa 5 cm bis 20 cm, bevorzugt 10 cm herzustellen. Diese Binder 6, 8 verstärken die Druckkabine 4 ausreichend.

In einer Ausführung sind die Binder 6, 8 mit der Oberfläche des Flugzeugrumpfes 2 verklebt, wobei als Kleber günstigerweise ein Kunstharz, zum Beispiel Epoxydharz Verwendung findet.

Nach einer weiteren vorteilhaften Ausführungsform sind im Rumpf 2 zur Aufnahme der Binder 6, 8 Vertiefungen vorgesehen. Auf diese Weise sind die Binder 6, 8 auf dem Rumpf 2 geführt und stehen so nicht über die Oberfläche des Rumpfes 2 hervor. Der zwischen dem Rand der Binder 6, 8 verbleibende Absatz oder Spalt wird anschließend verspachtelt, so daß die Oberfläche des Flugzeuges 1 glatt ausgebildet ist.

Die Stärke der Binder 6, 8 bewegt sich in einem Bereich zwischen 1 bis 5 mm. Es hat sich jedoch als vorteilhaft erwiesen Binder 6, 8 in einer Stärke von 2 mm auszubilden. Dies führt zu einer ausreichenden Stabilität der Druckkabine 4. Die Tiefe der Vertiefung ist vorteilhafterweise der Stärke der Binder 6, 8 angepasst.

Die Binder 6, 8 sind vorteilhafterweise aus dem gleichen Material aufgebaut wie die Teile des Flugzeugkörpers 2. Diese bestehen zum Beispiel aus einer Kunststoff-Faser-Verbundbauweise, wobei zum Beispiel ein mehrlagiges Vlies aus Kohle-, Glas- oder Aramidfasern mit Epoxydharz getränkt ist. In die Binder 6, 8 eingearbeitete Aluminiumfäden bieten einen Blitzschutz.

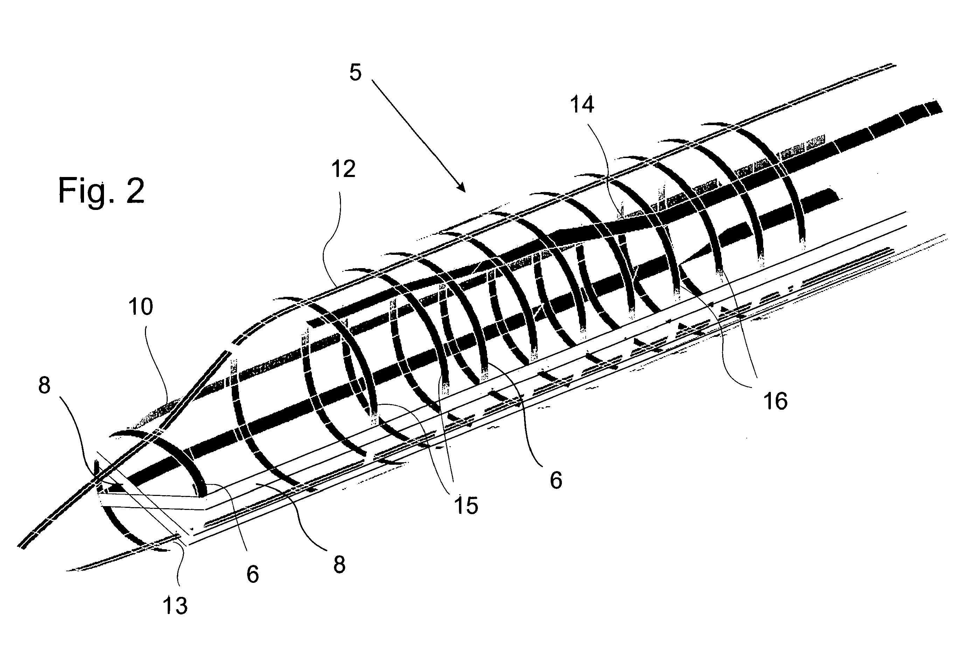

In Fig. 2 ist eine weitere Anordnung von Bindern dargestellt. Nach diesem Ausführungsbeispiel sind neben den Radial- und Querbindern 6, 8 auch Längsbinder 10a und 10b, 12 bis 14 vorgesehen, die parallel zur Längsachse angeordnet sind. Die Längsbinder 10a erstrecken sich beispielsweise vom hinteren Bereich der Druckkabine (nicht dargestellt) im wesentlichen parallel zur Längsachse bis zum vorderen Druckspant (nicht dargestellt) der Druckkabine.

Die Binder 12 und 13 ragen über die vordere Druckspante 3a hinaus und verstärken gleichzeitig die Nase des Flugzeugs 1.

Die hinteren Enden der Längsbinder können den hinteren Spant 3b überspannen oder verlaufen weiterhin auf der Oberfläche des Rumpfes 2 bis in den hinteren Bereich des Flugzeugs 1. Der Längsbinder 14 ist im hinteren Bereich des Rumpfes 2 etwas tiefer angesetzt als im vorderen Bereich. Diese Anordnung ist beispielsweise durch die Anordnung der Tür 7a bedingt, die im Bereich zwischen den beiden Binder 6a, 6b vorgesehen ist. Im Bereich zwischen den beiden Querbindern 6a, 6b verläuft der Längsbinder 14 oberhalb der Öffnung (nicht dargestellt) der Tür 7a, während die Fenster 7b, beispielsweise etwas tiefer angeordnet sind, so daß der Längsbinder 14 im Bereich der Querbinder 6c, 6d etwas tiefer angelegt sein kann. Die Längsbinder umfassen dabei gemäß der Erfindung sowohl den aus den beiden Teilen bestehenden Flugzeugkörper 2, wie auch nur einen Teil des Flugzeugkörpers. Auch bei dieser Variante wird eine Verbesserung der Stabilität erreicht.

Wie beschrieben, werden die Längsbinder nach vorne und nach hinten entsprechend verlängert ausgeführt, wodurch sich zum Beispiel im Bereich der Druckkabine eine Aufteilung des Längsbinders ergibt, derart, daß ein Teil des Binders nach hinten beziehungsweise nach vorne verlängert ist und der andere Teil die Druckkabine 4 umschlingt. Eine solche Ausgestaltung ist durch die Ausbildung des Binders in der beschriebenen Laminatbauweise problemlos möglich.

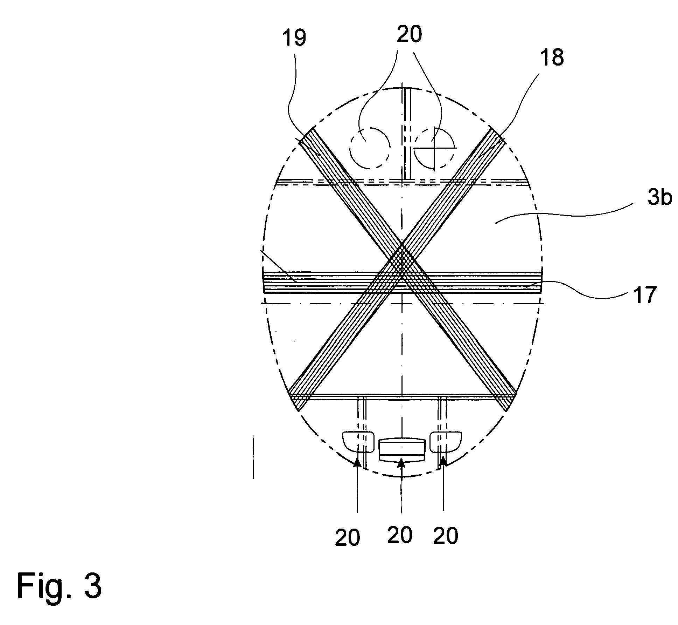

Fig. 3 zeigt einen der Druckspante, beispielsweise den hinteren Spant 3b in Draufsicht, wobei die Längsbinder den Spant diagonal übergreifen. Die Längsbinder 17, 18 und 19 sind derart zueinander angeordnet, daß sie im Bereich des Spants 3b in einem Winkel zueinander stehen. Die in der Fig. 3 dargestellten Durchbrüche, Erhebungen oder Vertiefungen 20 werden von den Bindern 17, 18 und 19 nicht überdeckt.

Nachdem der Flugzeugkörper 2 fertig gestellt ist, wird der Kunststoffkörper bei circa 80 °C ausgehärtet. Mit der Erfindung wird so eine sehr stabile Konstruktion geschaffen, um auch Flugzeuge 1 mit Druckkabinen 4 aus Kunststoff im Handlaminatverfahren (nicht im Autoklav) herstellen zu können.

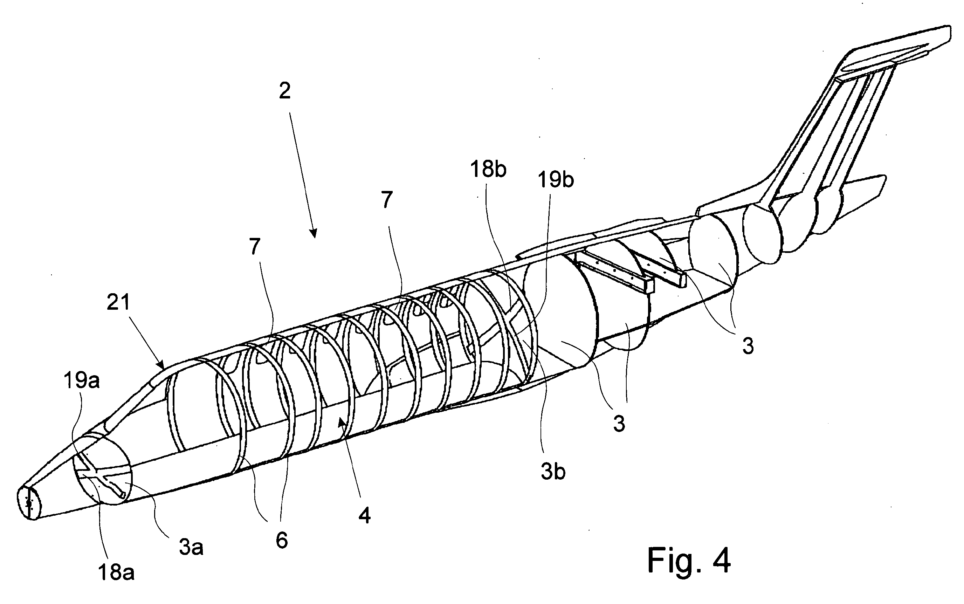

In Fig. 4 ist das erfindungsgemäße Flugzeug in Teilansicht dargestellt. Dieser Flugzeugkörper 2 besteht aus einer Halbschale 21 aus laminierten Kunststoffschichten. In dieser Halbschale 21 sind beispielsweise die Fenster 7b bereits ausgespart und die Querbinder 6 erstrecken sich rund um den Flugzeugkörper 2 zwischen den Fenstern 7. Die Bodenebene 22 des fertigen Rumpfes ist in der Halbschale 21 bereits vorgesehen. Des Weiteren sind in dem Flugzeugkörper 2 Spante 3 zu erkennen, die den Flugzeugkörper 2 stabilisieren. Diese Spante 3 sind über den gesamten Bereich des Flugzeugkörpers 2 vorgesehen und erstrecken sich bis in die Heckflosse des Flugzeugs 1. Insbesondere der Bereich in dem sich der Pilot und die Passagiere aufhalten, ist an beiden Enden mit den Druckspanten 3a, 3b verschlossen und bildet zusammen mit einem Teil des Flugzeugkörpers 2 die Druckkabine 4. Längsspanten sind in dieser Zeichnung nicht dargestellt, sie sind nur im Bereich der Spanten 3a und 3b zu erkennen, erstrecken sich jedoch, wie in Fig. 2 dargestellt ist, parallel zur Längsachse des Flugzeugs.

Die Erfindung ist insbesondere im Zusammenhang mit der Ausgestaltung eines Flugzeugkörpers in Kunststoffbauweise (faserverstärkter Kunststoff-Verbundbauweise mit Epoxydharz) beschrieben. Hierauf ist die Erfindung aber nicht beschränkt. Das erfindungsgemäße Ergebnis kann in gleicher Weise auch bei Flugzeugkörpern, die aus einem anderen Material (zum Beispiel Metall, Leichtmetall und so weiter) oder Verbundmaterialien (zum Beispiel unterschiedliches Material des Teiles und der Verstärkung) bestehen, erreicht werden.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Flugzeugkörper, insbesondere Flugzeugrumpf, bestehend aus wenigstens zwei, bevorzugt aus Kunststoff hergestellten Teilen, wobei die Teile an ihren Kanten miteinander verbunden sind der Flugzeugkörper (2) beziehungsweise die Teile zumindest teilweise mit einer Verstärkung (5) versehen ist/ sind.

2. Flugzeugkörper nach Anspruch 1, **dadurch gekennzeichnet, daß** die Verstärkung (5) von mindestens einem Binder (6, 8, 10, 12 - 14) gebildet ist, der den Flugzeugkörper (2) umgibt, wobei der Binder (6, 8, 10, 12 - 14) radial, längs und/oder quer zur Längsachse des Flugzeugkörpers (2) ausgerichtet ist.

3. Flugzeugkörper nach einem oder beiden der vorhergehenden Ansprüche, **dadurch gekennzeichnet, daß** die Verstärkung winklig insbesondere rechtwinklig zu der Kante verläuft und insbesondere die Kanten der benachbarten Teile übergreift und/oder der Binder (6, 8, 10, 12 - 14) aus Teilstücken besteht oder durchgehend beziehungsweise einstückig ausgebildet ist und/oder der Flugzeugkörper (2) aus zwei vorgefertigten Halbschalen (21) besteht.

4. Flugzeugkörper nach einem oder mehreren der vorhergehenden Ansprüche, **dadurch gekennzeichnet, daß** die Verbindungsebene der Halbschalen (21) vertikal entlang der Längsachse des Flugzeugkörpers (2) angeordnet ist und/oder die Halbschalen (21) mehrschichtig aufgebaut sind und/oder die Halbschalen (21) durch Laminieren, insbesondere Laminieren in einer Form hergestellt sind.

5. Flugzeugkörper nach einem oder mehreren der vorhergehenden Ansprüche, **dadurch gekennzeichnet, daß** in dem Flugzeugkörper (2) eine Druckkabine (4) vorgesehen ist, die an zumindest einem Ende durch ein als Druckspant (3a, 3b) ausgebildetes Teil verschlossen ist und/oder die Verstärkung (5) insbesondere im Bereich der Druckkabine (4) vorgesehen ist und/oder der Binder (6, 8, 10, 12 - 14) aus einem faserverstärkten, insbesondere kohlefaserverstärkten Kunststofflaminat besteht.

6. Flugzeugkörper nach einem oder mehreren der vorhergehenden Ansprüche, **dadurch gekennzeichnet, daß** Flugzeugkörper (2) und Binder (6, 8, 10, 12 - 14) aus dem gleichen Material bestehen und/oder der radial verlaufende Binder (6) zwischen Öffnungen (7), wie Türen (7a) oder Fenster (7b), des Flugzeugkörpers (2) angeordnet sind und/oder die Verstärkung, insbesondere der Binder (6) zumindest teilweise in mehreren Ebenen, die mit der Längsachse des Flugzeugkörpers unterschiedliche Winkel bilden, verläuft.

7. Flugzeugkörper nach einem oder mehreren der vorhergehenden Ansprüche, **dadurch gekennzeichnet, daß** die Verstärkung, insbesondere mehrere Binder (6) in mehreren Ebenen im Bereich der Kanten der benachbart angeordneten Teile angeordnet ist und/oder mindestens zwei Binder auf einem Teil übereinander angeordnet und miteinander verbunden sind und/oder die Verstärkung, insbesondere der Binder (6, 8, 10) auf der Außenseite des Flugzeugkörpers (2) angeordnet ist und/oder in dem Flugzeugkörper (2) Aussparungen (9) vorgesehen sind.

8. Flugzeugkörper nach einem oder mehreren der vorhergehenden Ansprüche, **dadurch gekennzeichnet, daß** der Binder (6, 8, 10, 12 - 14) ganz oder teilweise an den Enden der Druckkabine (4) in den Fugzeugkörper (2) hineingeführt ist und/oder die radial, längs und/oder quer verlaufenden Binder (6, 8, 10, 12 - 14) miteinander verbunden sind und/oder die Breite der Binder (6, 8, 10, 12 - 14) ca. 5 bis 20 cm, vorzugsweise 10 cm und die Stärke der Binder (6, 8, 10, 12 - 14) ca. 1 bis 5 mm, vorteilhafterweise 2 mm beträgt.

9. Flugzeugkörper nach einem oder mehreren der vorhergehenden Ansprüche, **dadurch gekennzeichnet, daß** der Binder (6, 8, 10, 12 - 14) mit den Teilen des Flugzeugkörpers (2) verbunden insbesondere verklebt ist und/oder als Klebstoff für das Verbinden des Binders (6, 8, 10, 12 - 14) mit dem Teil der Klebstoff des Kunststofflaminats eingesetzt ist und/oder als Klebstoff Epoxidharz vorgesehen ist.

10. Flugzeugkörper nach einem oder mehreren der vorhergehenden Ansprüche, **dadurch gekennzeichnet, daß** der Binder (6, 8, 10, 12 - 14) in einer im Teil des Flugzeugkörpers (2) vorgesehenen Vertiefung angeordnet ist und/oder ein zwischen dem Rand des Binders (6, 8, 10, 12 - 14) und dem Teil sich ausbildender Absatz oder Spalt durch Spachtelmasse ausgefüllt ist und/oder mindestens ein Binder (6, 8, 10, 12 - 14) die Druckkammer (4) vollständig umgibt und/oder die Längsbinder (10) geteilt sind.

11. Flugzeugkörper nach einem oder mehreren der vorhergehenden Ansprüche, **dadurch gekennzeichnet, daß** ein Teil des Längsbinders (10) in den Flugzeugkörper (2) hineingeführt ist, das Ende der Druckkabine (4) bzw. die Druckspante (3a, 3b) umfasst und der andere Teil auf der Oberfläche des Flugzeugkörpers (2) weitergeführt ist.

12. Verfahren zur Herstellung eines aus mindestens zwei Teilen bestehenden Flugzeugkörpers, insbesondere eines Flugzeugrumpfes, **gekennzeichnet durch** die Abfolge folgender Schritte:
- Herstellen der Teile des Flugzeugkörpers
- Zusammensetzen der Teile
- Verbinden der Teile an ihren Kanten
- Überdecken des Verbindungsbereichs der Kanten benachbarter, zusammengesetzter Teile **durch** Verstärkungen

13. Verfahren zur Herstellung eines aus mindestens zwei Teilen bestehenden Flugzeugkörpers, insbesondere eines Flugzeugrumpfes, insbesondere nach Anspruch 12, **gekennzeichnet durch** Umwickeln der zusammengesetzten Teile mittels Binder, wobei die Binder radial, quer und/oder längs zur Längsachse des Flugzeugkörpers ausgerichtet sind.

14. Verfahren nach einem oder beiden der vorhergehenden Ansprüche 12 und 13, **dadurch gekennzeichnet, daß** die Verstärkung beziehungsweise der Binder mit den Teilen des Flugzeugkörpers durch Kleben verbunden wird und/oder radial, quer und/oder längsverlaufende Binder miteinander verbunden werden und/oder **gekennzeichnet durch** Ausspachteln von Unebenheiten auf der Oberfläche des mit den Bindern versehenen Flugzeugkörpers.
